# EUROPEAN PATENT SPECIFICATION

(11) **EP 1 245 986 B1**
(45) Date of publication and mention of the grant of the patent: **21.12.2005**
(21) Application number: 02012391.5
(22) Date of filing: 05.07.1996
(51) Int. Cl.: G02B 21/00

(54) **Confocal microscope**
Konfokales Mikroskop
Microscope confocale

(30) Priority: 13.07.1995 JP 17710495; 28.08.1995 JP 21895995; 13.09.1995 JP 23493895; 18.12.1995 JP 32906095
(43) Date of publication of application: 02.10.2002
(62) Divisional of application: 96110909.7
(73) Proprietor: Yokogawa Electric Corporation, Tokyo 180-8750 (JP)
(72) Inventor: Sugiyama, Yumiko c/o YOKOGAWA ELECTRIC CORPORATION, Tokyo 180-8750 (JP); Tanaami, Takeo, Katsushika-ku, Tokyo 124 (JP); Mikuriya, Kenta, Hachioji-shi, Tokyo 193 (JP); Isozaki, Katsumi, Kitatsuru-gun, Yamanashi 409-01 (JP)
(74) Representative: Henkel, Feiler & Hänzel

(56) References cited:
- EP-A- 0 539 691
- WO-A-91/13379
- GB-A- 2 289 345
- JAMES B.PAWLEY: "Handbook of Biological Confocal Microscopy" 1995 , PLENUM PRESS , NEW YORK,US XP002035777 * page 155 - page 165 * see especially page 157

## Description

This invention relates to a confocal microscope incorporating a confocal laser scanner which rotates a Nipkow disk at high speed, and in particular, relates to improvement in light-using efficiency.

### DESCRIPTION OF THE PPJOR ART

Confocal microscopes are already known, and a confocal light scanner using a Nipkow disk rotating at high speed is also well known as a scanner incorporated in these confocal microscopes.

See eg. the patent application WO91/13379. However, those types of confocal microscopes or confocal scanners have their own problem of inefficient use of light.

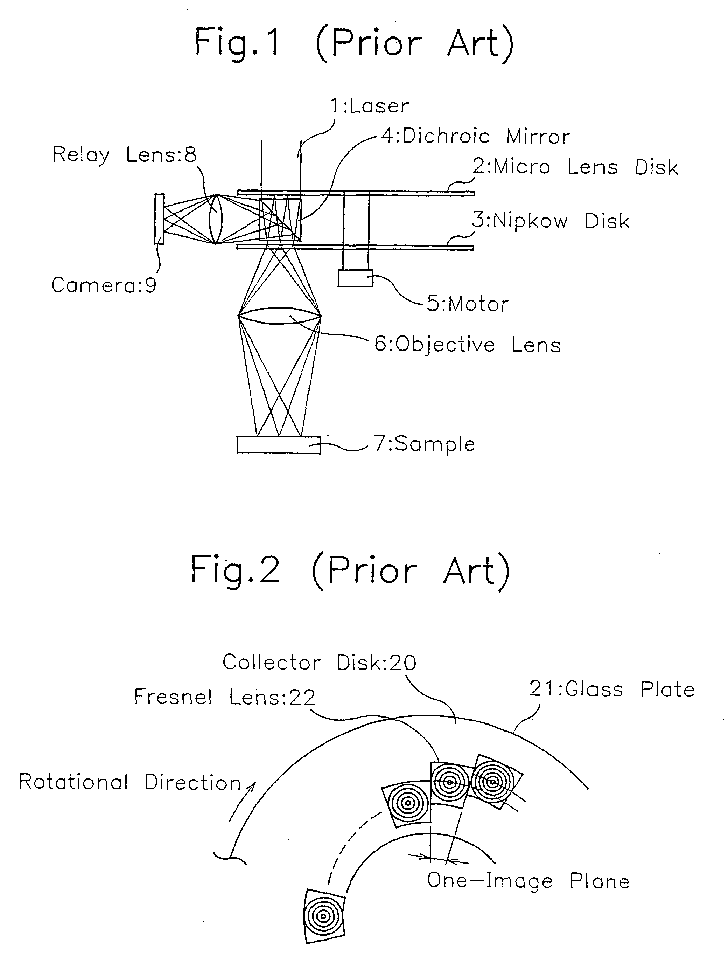

Figure 1 shows an example of such confocal light scanners. In the figure, laser 1 transmits microlenses (not shown) arranged in microlens disk 2 and cube-shaped dichroic mirror 4 respectively and focuses on pin-holes (minute openings, not shown) formed in an array in Nipkow disk 3.

In addition, as microlens disk 2, the collector disk, for example, described in patent application EP 0539691 can be used. Collector disk 20 is, as shown in Figure 2, composed of glass plate 21 on which a number of Fresnel lenses 22 are formed. The Fresnel lenses are so formed that the focusing position of each of them shifts radially one image plane by one image plane in turn.

Dichroic mirror 4 is retained in the space between microlens disk 2 and Nipkow disk 3 with a supporting mechanism not shown in the figure.

The light focused on the pin-holes of Nipkow disk 3 transmits objective lens 6 and is irradiated on sample 7.

Fluorescence emitted from sample 7 focuses on the pin-holes of Nipkow disk 3 through objective lens 6, and, thus, the real image of sample 7 is obtained at the above pin-holes. This image is reflected by dichroic mirror 4 and formed on the light-receiving plane of camera 9 through relay lens 8.

Nipkow disk 3 is coupled with microlens disk 2 and both disks rotate together by means of motor 5. In such a configuration, a two-dimensional image of the surface of sample 7 can be obtained on the light-receiving plane of camera 9 by scanning the surface of sample 7 with a light beam by rotating microlens disk 2 and Nipkow disk 3.

In such a conventional configuration, if a laser beam is incident vertically (at a 90-degree angle) to the microlens disk, the optical axis is not deflected in cube dichroic mirror 4, and so a light source image is formed on Nipkow disk 3 having the same pattern as that of microlens disk 2. This makes alignment of the microlenses and pin-holes easy.

However, cube dichroic mirror 4 has a problem in that since it has glass both in front of and behind the film and the refractive indices are the same, it is difficult to obtain a sharp characteristic for separating fluorescence from exciting light, compared with a plate dichroic mirror which can give a great difference between refractive indices on both sides because one side of it can be the air.

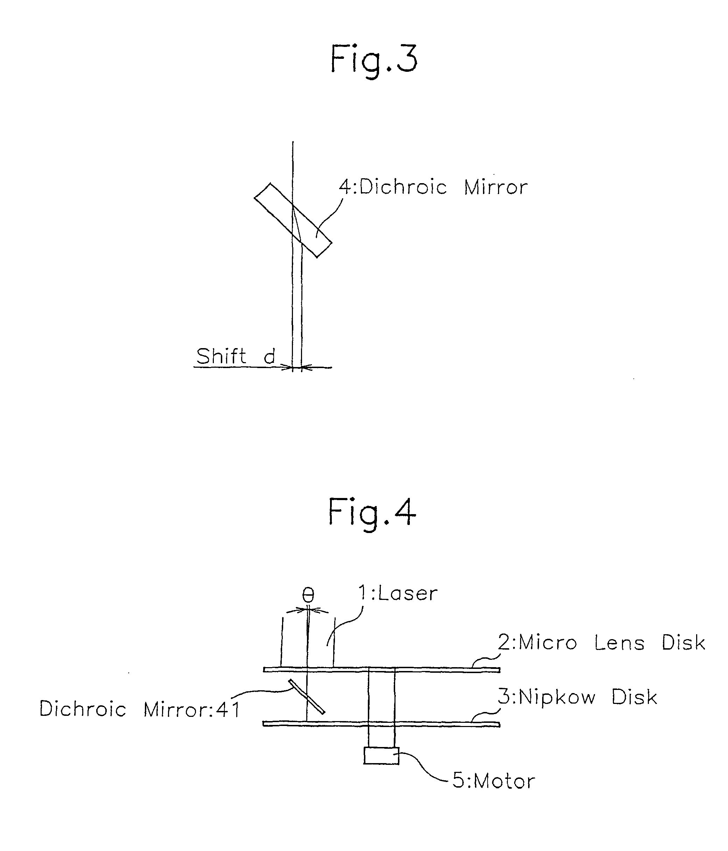

In order to improve fluorescence measuring performance in fluorescent confocal light scanners, the use of a plate dichroic mirror resolves the above problem. However, if a plate dichroic mirror is inserted between disks 2 and 3, the optical axis shifts by d as shown in Figure 3. For this reason, in this configuration, the pin-hole positions on Nipkow disk 3 could not be aligned with the microlenses in disk 2. As an aside, this problem is not limited to fluorescence types but also occurs in reflection beam splitters.

### SUMMARY OF THE INVENTION

The purpose of the present invention is to provide a confocal microscope which can improve light-using efficiency in view of the above problem.

The above object is achieved by a confocal microscope according to claim 1.

### BRIEF DESCRIPTION OF THE DRAWING

Figure 1 is a drawing showing the configuration of the essential part of a cofocal microscope in the prior art.
Figure 2 is a drawing showing an example of the configuration of microlenses in the prior art.
Figure 3 is a drawing illustrating the shift of the optical axis in a dichroic mirror.
Figure 4 is a drawing showing the configuration of a part of a confocal light scanner.
Figure 5 is an enlarged drawing illustrating the dichroic mirror.
Figure 6 is a drawing showing the configuration of a part of another confocal light scanner.
Figure 7 through Figure 10 are drawings showing the configuration parts of other confocal light scanners.
Figure 11 is a drawing showing the configuration of the essential part of a confocal microscope in the closest prior art.
Figure 12 is a drawing showing the relationship between the aperture of the objective lens and the laser light-incident position in the configuration shown in Figure 11.
Figure 13 is a drawing showing the configuration of the essential part of a confocal microscope according to the present invention.
Figure 14 is a drawing showing the relationship between the aperture of the objective lens and the laser light-incident position in the confocal microscope shown in Figure 13.
Figure 15 is a drawing showing the configuration of the essential part in the case where a light scanner is mounted on a microscope having a finite optical system in the prior art.
Figure 16 is a drawing showing the relationship between the aperture of the objective lens and the laser light-incident position in the configuration shown in Figure 15.
Figure 17 is a drawing showing the configuration of the essential part of another confocal microscope.
Figure 18 is a drawing showing the relationship between the aperture of the objective lens and the laser light-incident position in the configuration shown in Figure 17.
Figure 19 is a drawing showing the configuration of the essential part another confocal microscope.

### DESCRIPTION OF THE PREFERRED EMBODIMENTS

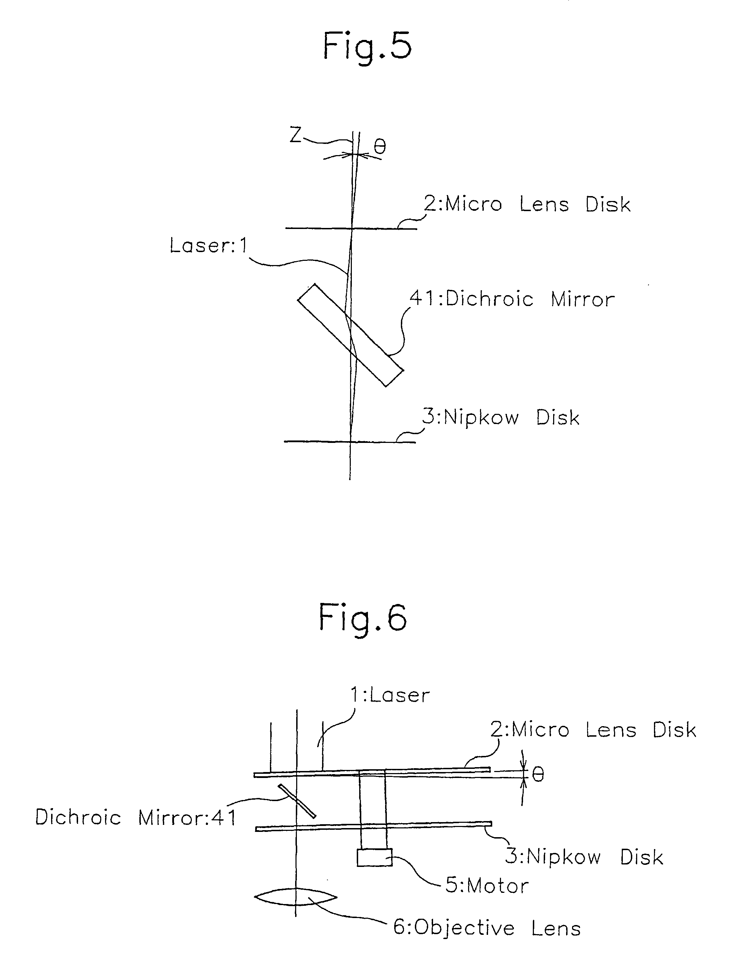

Hereafter the present invention will be described in detail using drawings. Figure 4 is a drawing showing the configuration of the essential part of a confocal light scanner, and Figure 5 is an enlarged drawing illustrating the dichroic mirror. In the following description, the same symbols or numbers are given for the same parts as those in Figure 1 and description of those parts will be omitted.

In Figures 4 and 5, the number 41 indicates a plate dichroic mirror placed between microlens disk 2 and Nipkow disk 3. As shown in Figure 5, laser 1 is incident to microlens disk 2 with its optical axis tilted by angle θ from the vertical incident axis Z of microlenses in microlens disk 2. This tilted angle θ is determined in relation to the distance between microlens disk 2 and Nipkow disk 3 and the thickness of dichroic mirror 41. The laser light diaphragmed by the microlenses is shifted for its optical axis by dichroic mirror 41, transmitted through pin-holes in Nipkow disk 3 adjusted to be vertical under the microlens disk in the same pattern, and scanned over a sample by being rotated with motor 5. Here, since the other operations are the same as those in the prior art, their description is omitted.

In the above-described manner, the optical axis shift due to the plate dichroic mirror can be corrected by having the laser light be incident to microlens disk 2 with the laser light tilted from vertical.

Figure 6 is a drawing showing a part of another confocal scanner. In the above embodiment, the optical axis of the laser light is tilted from the vertical incident axis to the microlenses. However, in the case of Figure 6, a unit in which microlens disk 2, Nipkow disk 3, dichroic mirror 41, and motor 5 are integrated is tilted by angle θ from laser 1 with the optical axis of original laser 1 aligned with the vertical incident optical axis of objective lens 6. In such a configuration, the same effect can be obtained as in the confocal light scanner of figure 4.

As explained above, the confocal light scanners described can cancel the shift of the laser light optical axis due to the plate dichroic mirror by tilting the optical axis by a significant angle against microlens disk 2 and facilitate the use of the plate dichroic mirror having a characteristic of good fluorescent light separation from the exciting light.

In addition, the following configuration can also be employed as a measure for improving light-using efficiency. That is, it can be achieved by widening the field of view in a confocal microscope shown in Figure 1. However, in this confocal microscope, microlenses of a long focal length and with a small number of apertures (NA) cannot but be used to widen the field of view. This configuration, however, has the following problems:
(1) General-purpose microlenses of a short focal length and with large NA's cannot be used and, thus, this leads to a high price.
(2) It is difficult to construct a measurement system with a wide field of view and large NA's. For example, if a wide area, such as the surface of an IC, is to be viewed at low magnification, an ordinary low-magnification objective lens cannot provide a sufficient slice image because of its small NA's, while in order to obtain a wide field of view and large NA's, small pin-holes and large NA microlenses are necessary; but it is difficult as mentioned above.
(3) Although the reflection-excited dichroic mirrors used in commercially available incident-light fluorescence microscopes transmit longer wavelengths and reflect shorter wavelengths, the above confocal microscope has a construction to transmit shorter wavelengths and reflect longer wavelengths. This prevents the use of a commercially available dichroic mirror.

In order to solve this problem confocal light scanners are known in which, the optical axis is introduced to the peripheral side and returned to the pin-holes with another mirror. In this case, the length of light path is extended with relay lenses. This enables a microlens of a short focal length to be used and also, a commercially available dichroic mirror can be used as the beam splitter.

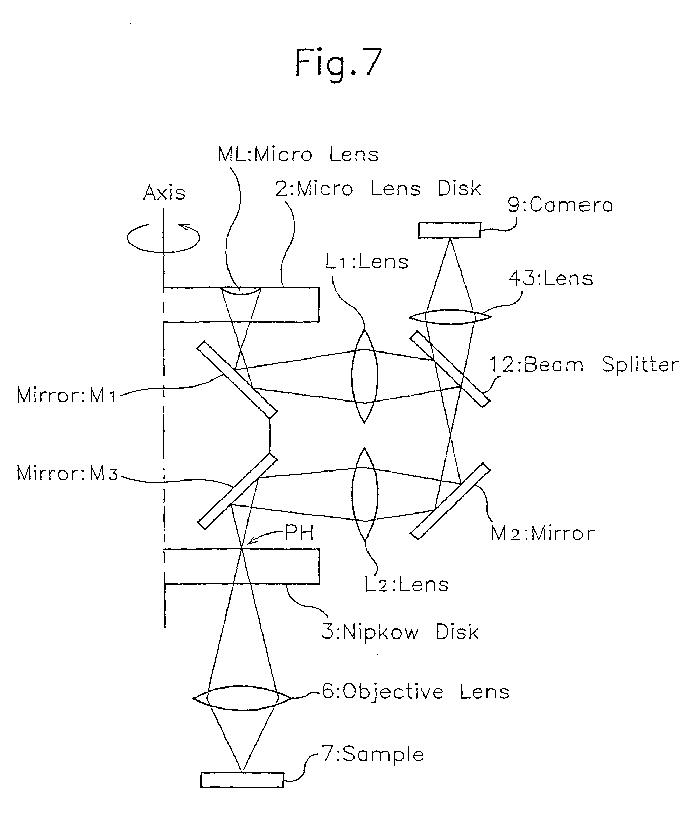

Details will be explained. In Figure 7, M₁, M₂, and M₃ are the first, second and third reflection mirrors respectively and L₁ and L₂ are the first and second relay lenses.

The light that transmit through microlens ML in converging disk 2 is reflected with the first mirror M₁, diaphragmed with first lens L₁ and is incident to beam splitter 12 (here, a dichroic mirror). This incident light has shorter wavelengths, is reflected with dichroic mirror 12, then reflected with mirror M₂, diaphragmed with second lens L₂, reflected with third mirror M₃ and focused on pin-hole PH in pin-hole disk 3.

The light focused on pin-hole PH transmits through objective lens 6 and irradiates sample 7 similar to that in the prior art. The return light from the sample transmits through objective lens 6 and forms the image of the sample on pin-hole PH. This real image is reflected with third mirror M₃, diaphragmed with second lens L₂, reflected with second mirror M₂, transmitted through beam splitter 12, and then diaphragmed with converging lens 43 and focused on the light-receiving plane of camera 9.

In this case, mirrors M₁, M₂, and M₃, lenses L₁ and L₂, beam splitter 12, converging lens 43, and camera 9 are arranged in fixed positions. In this configuration, the lengths of each light path from each microlens ML to its corresponding pin-hole PH are all the same.

As described above, since the light path distance is extended using relay lenses L₁ and L₂ so that the optical axis is introduced to the peripheral side of disks 14 and 15 with reflection mirror M₁ and is returned to pin-hole PH with second and third reflection mirrors M₂ and M₃, microlens ML of a short focal length can be used.

In addition, since beam splitter 12 in this embodiment reflects the incident light and transmits the return light, a dichroic mirror of the type which reflects the incident light and transmits the return light can be used instead of beam splitter 12.

Further, a microlens of a short focal distance for optical fibers available on the market can be used as microlens ML.

The adoption of such construction makes the use of microlenses of a short focal length and large NA's possible and enables the NA's of microlenses and the NA incident to pin-holes to be designed separately.

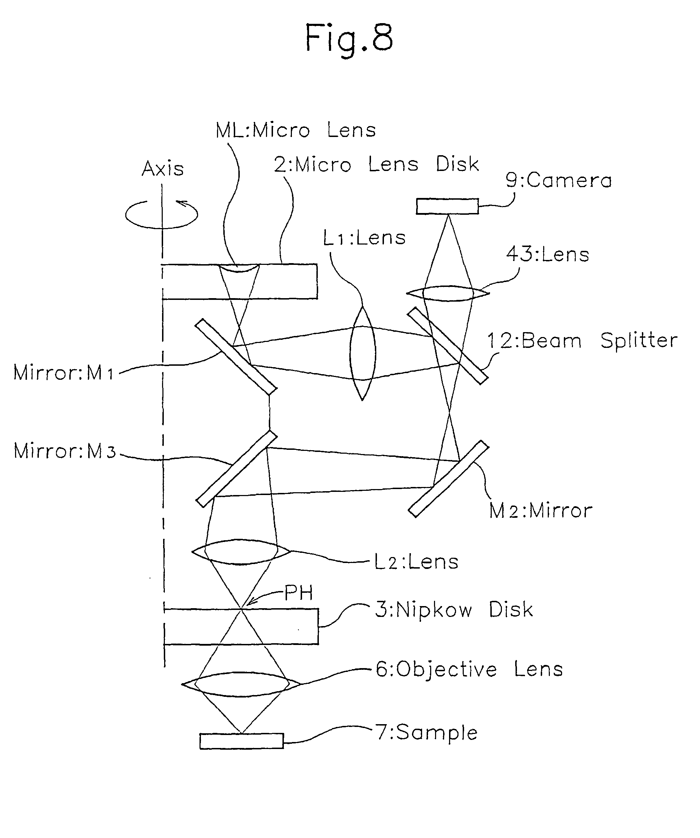

Figure 8 is a drawing showing another configuration. The difference from Figure 7 is the configuration where second lens L₂ is located between third mirror M₃ and pin-hole disk 15 so that the system can cope with a large NA objective lens.

For instance, the number of apertures of the objective lens is normally 0.2 for a magnification of 10 in generic cofocal microscopes and, thus, the NA's at the pin-hole is 0.2/10 = 0.02. In this case, the pin-hole diameter is 30 µm. While, in the case of large NA's, i.e., a magnification of 10 and an objective lens NA of 0.9, the NA's at the pin-hole is 0.09 and the pin-hole diameter is 7 µm.

Employing the configuration as shown in Figure 8, small pin-holes and large NA microlenses can be used together with a large NA objective lens.

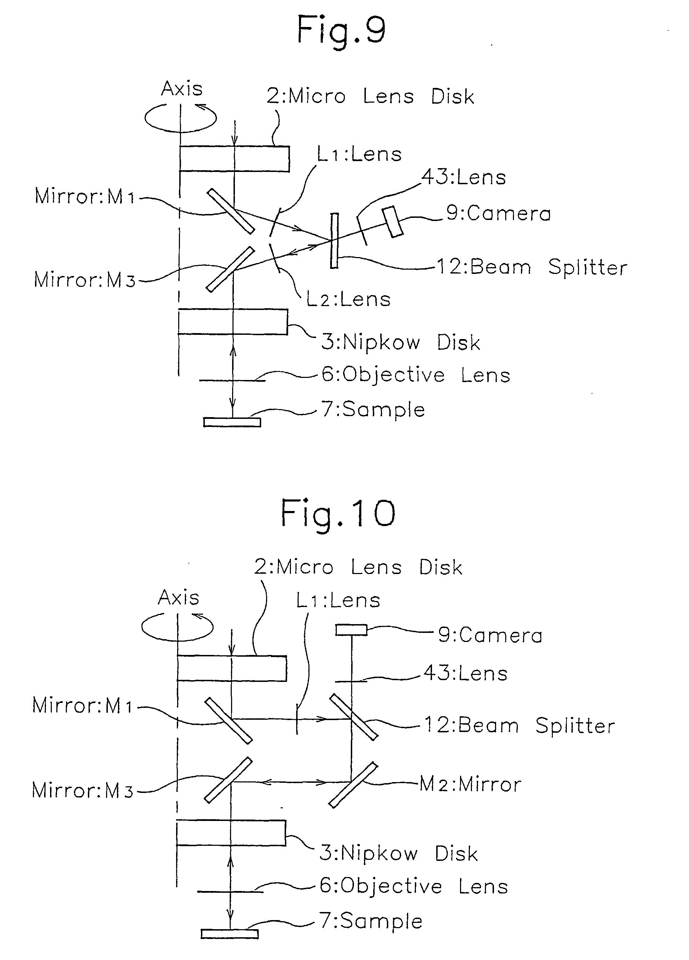

Figure 9 is a drawing showing the configuration of parts of other confocal light scanners. The difference from that in Figure 7 is that there are two mirrors (M₁ and M₃) omitting second mirror M₂.

In addition, an configuration shown in Figure 10 is equivalent to the configuration where second lens L₂ is removed in Figure 7.

As described, in the configuration explained above, the insertion of mirrors and lenses between the microlenses and pin-holes enables the NA's of the microlenses on the light source side and the NA's on the pin-hole side to be designed independently. Therefore, the small pin-holes and the microlenses of a short focal length and with large NA's can be employed, facilitating the implementation of the measuring system of a wide field of view and large NA's.

Further, since the light path length from the microlenses to the pin-holes is extended using relay lenses, a reflection-excitation dichroic mirror can be used instead of a beam splitter and a confocal microscope having a sufficient wave length characteristic and having a low cost can easily be realized. In addition, by tilting these mirrors M₁ and M₃, a plate dichroic mirror can be used.

Another measure for improvement of light-using efficiency, that is, a configuration to improve the light-using efficiency at the periphery of the field of view and the resolution in a microscope consisting of an infinite optical system, is explained below.

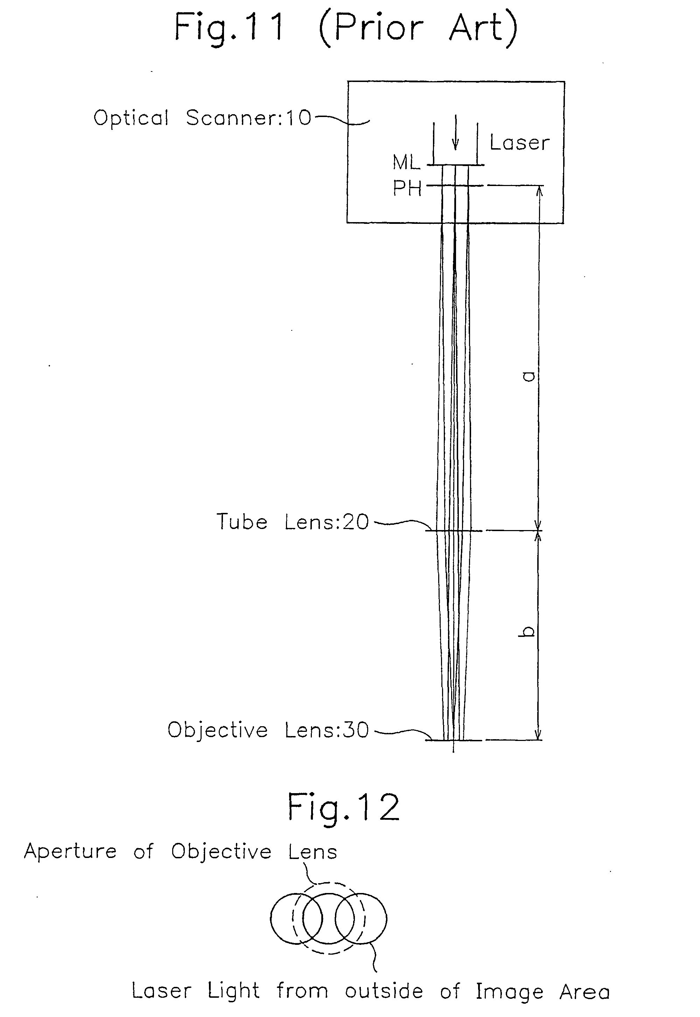

Figure 11 shows an example of the essential part of the optical system when an optical scanner is attached to such a type of microscope in the closest prior art. In this figure, the number 10 indicates an optical scanner, 20 a tube lens, and 30 the objective lens. The laser light converged by microlens ML in the optical scanner becomes a point source at the pin-hole (the point sources of three pin-holes are typically shown in the figure), and the light beams from these point sources become parallel with each other via tube lens 20 and are incident to objective lens 30.

In this case, since a microscope consisting of an infinite optical system is configured based on the principle of Koehler illumination to illuminate the sample in the highest brightness, the interval "b" between tube lens 20 and objective lens 30 is not equal to the focal length "a" of tube lens 20. Accordingly, if a confocal optical scanner with pin-holes is attached to such a microscope having an infinite optical system, the light from the outside of the pin-hole array is incident to positions shifted from the center of the aperture of objective lens 30 as shown in Figure 12 including the following problems.
(1) The diameter of the aperture is small depending on the kind of objective lens 30 and this reduces the light quantity from the outside pin-holes and, thus, the illumination light quantity declines at the periphery (illumination nonuniformity occurs).
(2) Since the aperture of the objective lens cannot be filled with the light from the outside pin-holes and, thus, the number of apertures (NA) of objective lens 30 cannot be fully utilized, the resolution becomes low at the outside area.

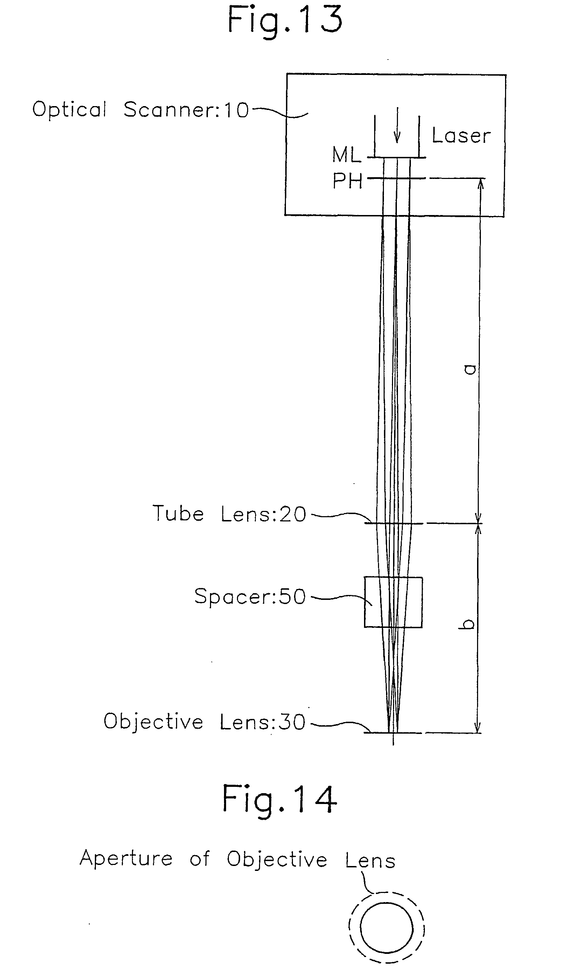

In order to resolve these problems, the preferred embodiment according to the present invention is shown in Figure 13 suffices. The difference between Figure 13 and Figure 11 is that spacer 50 is inserted between tube lens 20 and objective lens 30 so that the distance between tube lens 20 and objective lens 30 is equal to the focal length "a" of tube lens 20.

Spacer 50 is a hollow ring engaged with a cylinder (not shown) to which tube lens 20 and objective lens 30 are mounted, which extends the cylinder. If such spacer 50 is mounted to equalize the distance of tube lens 20 and objective lens 30 to the focal length "a" of tube lens 20, the laser light from all pin-holes PH is incident to the center of the aperture of objective lens 30 as a result, as shown in Figure 14.

In addition, in the case of this embodiment according to the invention, the optical system holds without microlenses ML.

In the above embodiment according to the invention, since the laser light from the pin-holes at the outside area can be incident to the center of the aperture of the objective lens, the following effects are obtained.
(1) Light loss is eliminated because the light quantity from the pin-holes from the outer part of image area is not reduced by the diameter of the aperture of the objective lens and, thus, the light-using efficiency is raised and no illumination nonuniformity is generated as well.
(2) Both pin-holes at the outer part and center part of the image area can equally and effectively use the aperture of the objective lens, the number of apertures does not decrease, and lowering of the resolution only for the outer part does not occur.

The above described inventive embodiment is for microscopes of an infinite optical system; for microscopes of a finite optical system, the following configuration will be made.

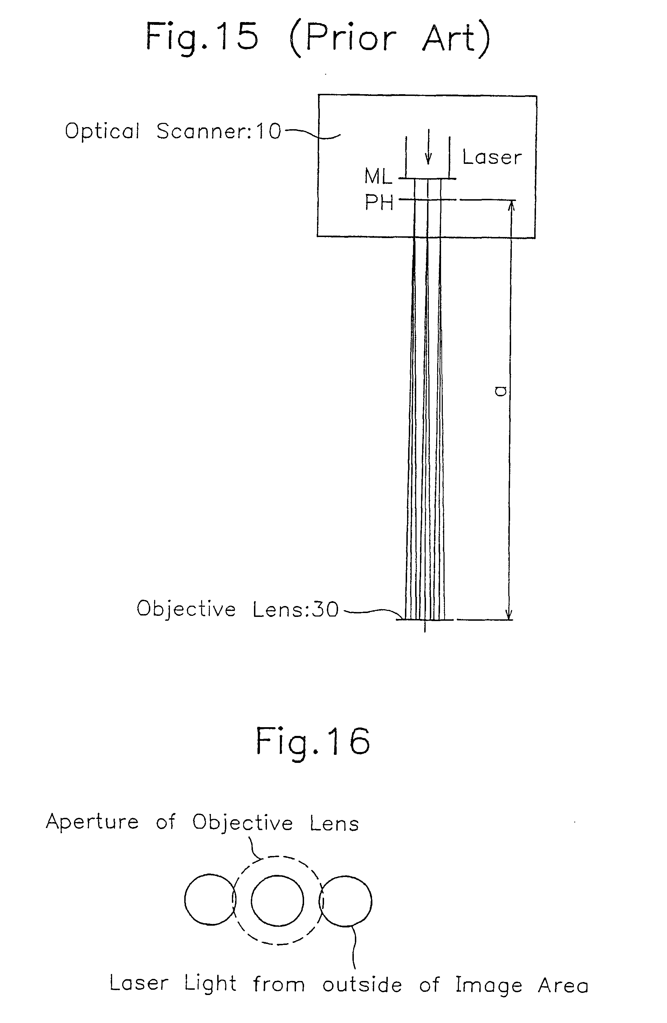

For microscopes of a finite optical system, the distance of pin-hole PH and objective lens 30 is equal to the image focal length "a" as shown in Figure 15. For this reason, all light beams from pin-holes PH are incident to objective lens 30 with their optical axis at 0 degree and in parallel with each other, and the light from the outer part is incident to the shifted part from the center of the aperture of objective lens 30 as shown in Figure 16. If a lens having the same focal length as the image focal length of the objective lens is provided between the minute openings and the objective lens to enable the light from all minute openings to be incident to the center of the aperture of the objective lens, the loss of light at the outer part can be eliminated and the light-using efficiency can be improved. Also, the resolution at the outer part can be raised.

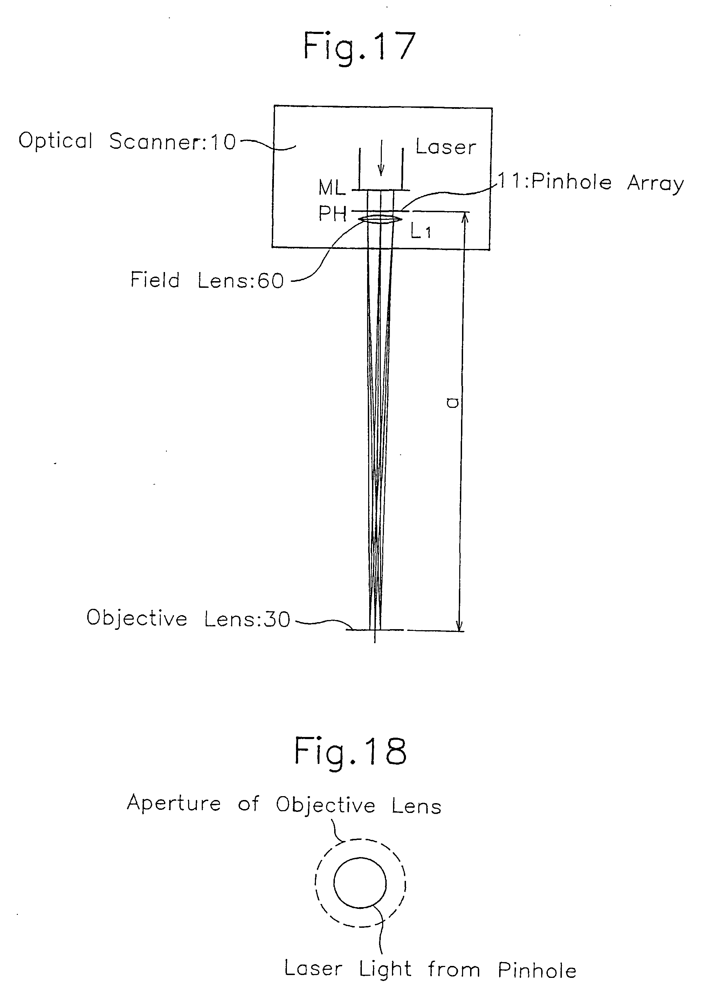

Figure 17 shows such a configuration. The difference between Figure 17 and Figure 15 is that field lens 60 is provided immediately under the pin-hole array. Field lens 60 has the same focal length as the image focal length "a" of objective lens 30 in a finite optical system microscope and placed close to pin-hole array 11 (in other words, immediately under pin-hole array 11).

The laser light is diaphragmed by microlens ML into pin-hole PH and the optical axis of the laser light that passes through pin-hole PH is deflected toward the center of the objective lens 30 aperture by field lens 60 placed immediately under pin-hole PH. Accordingly, the laser light from all pin-holes PH is incident to the center of the aperture of objective lens 30 as shown in Figure 18.

The optical axis of the return light from the sample (not shown) is deflected by field lens 60 so that the optical axis is incident at 0 degree to pin-hole PH. This increases the light-using efficiency.

In this case, if field lens 60 is considerably distant from the pin-hole surface, an aberration occurs. However, generally, since the focal length "a" can be designed to be about 200 mm, the distance between pin-hole PH and field lens 60 to be about 10 mm, there is virtually no problem from the aberration.

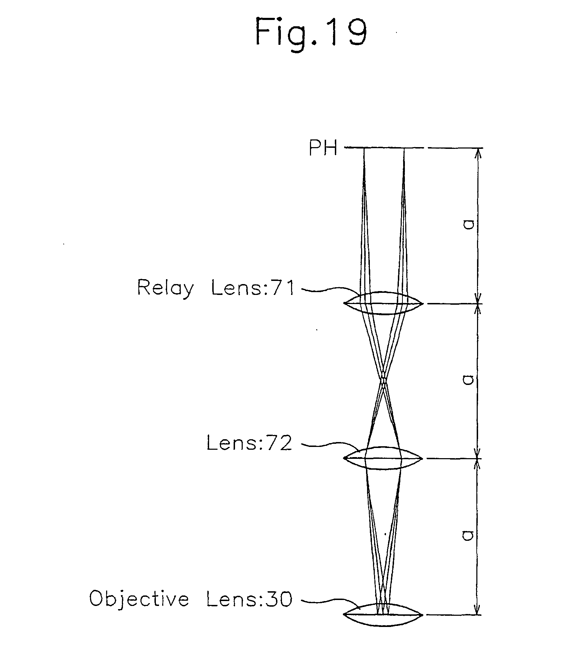

Figure 19 is a drawing showing yet another configuration. In this figure, the number 71 shows a relay lens and number 72, a lens.

Relay lens 71 forms the image plane of pin-holes PH in the position of the image focal length "a" of objective lens 30 and is placed between pin-holes PH and objective lens 30.

Lens 72 has the same focal length as the image focal length "a" of objective lens 30 and is placed in the position of the image plane of pin-holes PH obtained by relay lens 71.

Such a configuration enables all the light from the pin-holes to be incident to the center of the aperture of objective lens 30.

The present invention as defined in claim 1 is not limited to the above embodiments but can be appropriately modified or suitably changed. For example, the shape of a minute opening is not limited to a circle, but may be other shapes, in as much as the same purpose can be accomplished.

## Claims

1. A confocal microscope comprising: a confocal light scanner (10) which has a pin-hole array having a plurality of minute openings, a microscope of an infinite optical system, to which said confocal light scanner is attached so that an image on a sample surface can be observed by scanning the sample surface with the light by rotating said pin-hole array; said microscope being configured so that the laser beams from the said minute openings in the pin-hole array are irradiated to a sample through a tube lens (20) and an objective lens (30) and the return beams from the sample return to the said pin-holes through the said objective and tube lenses (30,20), **characterized in that** the distance between the said tube lens (20) and objective lens (30) is set to be equal to the focal length of the tube lens.

## Patentansprüche

1. Konfokales Mikroskop umfassend: einen konfokalen Lichtscanner (10), der ein Lochblenden-Array mit einer Mehrzahl von kleinen Öffnungen aufweist, ein Mikroskop eines infiniten optischen Systems, an dem der konfokale Lichtscanner befestigt ist, so dass ein Bild einer Probenoberfläche durch Abtasten der Probenoberfläche mit dem Licht durch Drehen des Lochblenden-Arrays beobachtet werden kann; wobei das Mikroskop konfiguriert ist, so dass die Laserstrahlen von den kleinen Öffnungen in dem Lochblenden-Array durch eine Tubuslinse (20) und eine Objektivlinse (30) auf eine Probe gestrahlt werden, und die Rückstrahlen von der Probe zu den Lochblenden durch das Objektiv und die Tubuslinsen (30,20) zurückkehren, **dadurch gekennzeichnet, dass** der Abstand zwischen der Tubuslinse (20) und der Objektivlinse (30) eingestellt wird, um gleich der Brennweite der Tubuslinse zu sein.

## Revendications

1. Microscope à foyer commun comprenant : un analyseur de lumière à foyer commun (10) qui comporte un réseau de sténopés comportant une pluralité de minuscules ouvertures, un microscope d'un système optique infini, auquel est fixé ledit analyseur de lumière à foyer commun de sorte qu'une image d'une surface d'un échantillon puisse être observée en balayant la surface de l'échantillon avec la lumière en faisant tourner ledit réseau de sténopés, ledit microscope étant configuré de manière à ce que les faisceaux laser provenant desdites minuscules ouvertures dans le réseau de sténopés soient rayonnés sur un échantillon par l'intermédiaire d'une lentille tubulaire (20) et d'une lentille d'objectif (30) et que les faisceaux de retour provenant de l'échantillon reviennent vers lesdits sténopés au travers desdites lentilles d'objectif et tubulaire (30, 20), **caractérisé en ce que** la distance entre ladite lentille tubulaire (20) et la lentille d'objectif (30) soit établie de façon à être égale à la distance focale de la lentille tubulaire.
